# EUROPEAN PATENT APPLICATION

(11) **EP 4 650 038 A1**
(43) Date of publication of application: **19.11.2025**
(21) Application number: 23916312.4
(22) Date of filing: 28.12.2023
(51) Int. Cl.: B01D 65/10, B01D 53/22, B01D 63/00

(54) **SEPARATION FILM SYSTEM AND METHOD FOR INCREASING TEMPERATURE OF SEPARATION FILM**

(30) Priority: 11.01.2023 JP 2023002440; 17.05.2023 JP 2023081777
(71) Applicant: NGK Insulators, Ltd., Nagoya-shi, Aichi 467-8530 (JP)
(72) Inventor: SHIMIZU, Katsuya, Nagoya-shi, Aichi 467-8530 (JP); KOJIMA, Miyuki, Nagoya-shi, Aichi 467-8530 (JP); IIDA, Kazuki, Nagoya-shi, Aichi 467-8530 (JP); NAKAGAWA, Kosuke, Nagoya-shi, Aichi 467-8530 (JP); MAEHARA, Sota, Nagoya-shi, Aichi 467-8530 (JP); KAN, Hirofumi, Nagoya-shi, Aichi 467-8530 (JP)
(74) Representative: Müller-Boré & Partner Patentanwälte PartG mbB
(86) International application number: PCT/JP2023/047204
(87) International publication number: WO 2024/150699

(57) **Abstract**

Provided is a separation membrane system, which includes a separation membrane, and which can detect an abnormality of the separation membrane with high sensitivity at an early stage. The separation membrane system according to an embodiment of the present invention includes: a supply line configured to supply a mixed gas of a polar gas and a non-polar gas to a separation membrane; and a measurement device configured to measure a flow rate of the non-polar gas that has permeated through the separation membrane. In the separation membrane system, the mixed gas may be a heated gas.

## Description

### Technical Field

The present invention relates to a separation membrane system and a temperature increase method for a separation membrane.

### Background Art

Hitherto, investigations have been made on various methods for separating a desired component from a fluid containing two or more kinds of components. For example, a method including using a separation membrane that allows a specific component to selectively permeate therethrough has been known as one of such methods. In the separation method with such separation membrane, an abnormality (e.g., a seal leak, a defect leak, or a membrane fracture) of the separation membrane may occur at the time of preparation for use and/or at the time of use, and hence the abnormality is required to be detected with high sensitivity at an early stage.

### Citation List

### Patent Literature

[PTL 1] JP 2017-087192 A
[PTL 2] WO 2014/050702 A1

### Summary of Invention

### Technical Problem

A primary object of the present invention is to provide a separation membrane system, which includes a separation membrane, and which can detect an abnormality of the separation membrane with high sensitivity at an early stage.

### Solution to Problem

[1] According to an embodiment of the present invention, there is provided a separation membrane system, including: a supply line configured to supply a mixed gas of a polar gas and a non-polar gas to a separation membrane; and a measurement device configured to measure a flow rate of the non-polar gas that has permeated through the separation membrane.
[2] In the separation membrane system according to the above-mentioned item [1], the mixed gas may be a heated gas.
[3] In the separation membrane system according to the above-mentioned item [2], the separation membrane system may further include a heating device arranged upstream of the separation membrane.
[4] In the separation membrane system according to any one of the above-mentioned items [1] to [3], the separation membrane may be a zeolite membrane.
[5] According to an embodiment of the present invention, there is provided a temperature increase method for a separation membrane, including the steps of: supplying, to a separation membrane, a mixed gas of a polar gas and a non-polar gas, the mixed gas being a heated mixed gas; and measuring a flow rate of the non-polar gas that has permeated through the separation membrane.
[6] In the temperature increase method for a separation membrane according to the above-mentioned item [5], a concentration of the non-polar gas to be supplied to the separation membrane may be less than 50 vol%.
[7] In the temperature increase method for a separation membrane according to the above-mentioned item [5] or [6], a concentration of the non-polar gas to be supplied to the separation membrane may be less than 25 vol%.

### Advantageous Effects of Invention

According to the embodiment of the present invention, the separation membrane system, which includes a separation membrane, and which can detect an abnormality of the separation membrane with high sensitivity at an early stage, can be provided.

### Brief Description of Drawings

FIG. **1** is an explanatory view for illustrating the outline of a separation membrane system according to one embodiment of the present invention.
FIG. **2** is an explanatory view for illustrating the schematic configuration of a separation membrane complex in one embodiment of the present invention.
FIG. **3** is a schematic cross-sectional view for illustrating the configuration of the separation membrane complex in one embodiment of the present invention.

### Description of Embodiments

### A. Separation Membrane System

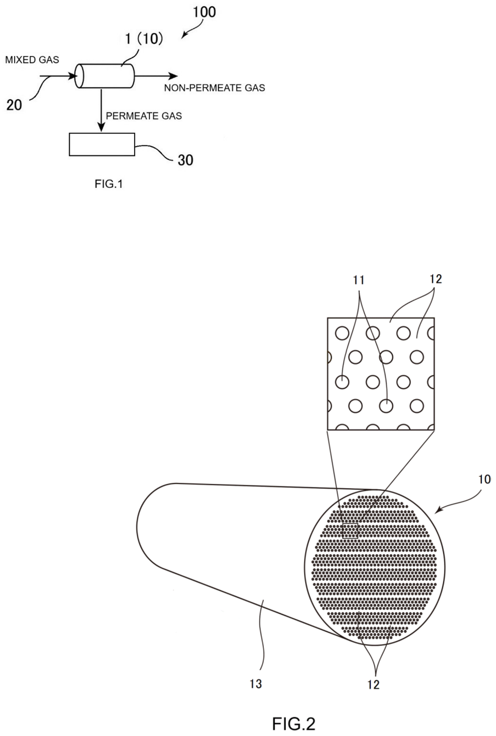

FIG. **1** is an explanatory view for illustrating the outline of a separation membrane system according to one embodiment of the present invention. A separation membrane system **100** includes: a supply line **20** configured to supply a mixed gas of a polar gas and a non-polar gas to a separation membrane **1;** and a measurement device **30** configured to measure a flow rate of the non-polar gas that has permeated through the separation membrane **1.** In one embodiment, the separation membrane may form a separation membrane complex **10.** The separation membrane **1** can separate a mixed fluid supplied to the separation membrane on the basis of permeability. An embodiment including: supplying the above-mentioned mixed gas to the cylindrical separation membrane **1;** and measuring the flow rate of the non-polar gas in the gas that has permeated through the separation membrane (permeate gas) with the measurement device **30** is schematically illustrated in FIG. **1****.** Herein, the term "polar gas" refers to a gas containing a molecule formed of atoms of kinds different from each other in electronegativity. Examples of the polar gas include CO₂, NH₃, H₂O, and CO. In addition, the term "non-polar gas" refers to a gas formed of a single-atom molecule or a molecule formed of atoms of kinds equal to each other in electronegativity. Examples of the non-polar gas include He, H₂, and N₂. In one embodiment, the polar gas may be a gas formed of a polar molecule, and the non-polar gas may be a gas formed of a non-polar molecule. In other words, in one embodiment, the polar gas may be a gas in which the molecule for forming the gas has an electric dipole moment, and the non-polar gas may be a gas in which the molecule for forming the gas has no electric dipole moment.

In the separation membrane system, the flow rate of the non-polar gas that has permeated through the separation membrane can be measured, and hence an abnormality of the separation membrane can be detected on the basis of the flow rate of the non-polar gas. Specifically, when the flow rate of the non-polar gas that has permeated through the separation membrane is larger than a predetermined value, it may be judged that there is an abnormality such as occurrence of a seal leak or a membrane crack. In addition, when the flow rate of the non-polar gas is smaller than the predetermined value, it may be judged that there is an abnormality, such as clogging or alteration of a membrane material. The non-polar gas has a low degree of contribution of adsorption to the permeability of the separation membrane, and hence the temperature dependency of the permeation amount is small. Accordingly, an abnormality of the flow rate of the non-polar gas that permeates through the separation membrane has a strong relationship with an abnormality of the separation membrane. Accordingly, the abnormality of the separation membrane can be detected with high sensitivity at an early stage by supplying the mixed gas containing the non-polar gas to the separation membrane and measuring the flow rate of the non-polar gas. In particular, when a heated gas is used as the mixed gas as described later, such effect of the embodiment of the present invention becomes significant.

In one embodiment, a heated gas may be used as the above-mentioned mixed gas to be supplied to the separation membrane. In this embodiment, the separation membrane system may typically include any appropriate heating device (not shown) arranged upstream of the separation membrane. For example, the above-mentioned supply line may include any appropriate heating device (not shown). Herein, the term "heated gas" refers to a gas having a temperature equal to or higher than normal temperature. The heated gas may be, for example, a gas having a temperature of 100°C or more, preferably 120°C or more, more preferably 150°C or more.

In one embodiment, a temperature increase of the separation membrane is performed with a heated mixed gas. The polar gas has high affinity for, and adsorptivity onto, the separation membrane. Accordingly, when the gas containing the polar gas is used as the above-mentioned mixed gas, the heating of the separation membrane can be efficiently performed. Meanwhile, the polar gas has high temperature dependency of the permeability through the separation membrane, and hence it is difficult to detect an abnormality of the separation membrane on the basis of the flow rate of the polar gas that permeates through the separation membrane. In the present invention, with such a configuration that the mixed gas of the polar gas and the non-polar gas is supplied to the separation membrane, the abnormality of the separation membrane can be detected with high sensitivity at an early stage as described above.

Examples of the non-polar gas include He, H₂, and N₂. Of those, He and H₂ are preferably used from the viewpoints of low adsorptivity onto the separation membrane and lower dependency of the permeability through the separation membrane on the temperature. The concentration of the non-polar gas in the mixed gas to be supplied to the separation membrane is not particularly limited, but is preferably a concentration that can be measured with an analyzer with high accuracy. In one embodiment, the concentration of the non-polar gas in the mixed gas to be supplied to the separation membrane may be set to 0.001 vol% or more. With such concentration, the concentration can be preferably measured with, for example, a GC-TCD. In one embodiment, the concentration of the non-polar gas in the mixed gas to be supplied to the separation membrane may be set to 1 vol% or more. With such concentration, the concentration can be preferably measured by, for example, online measurement with a thermal conductivity gas analyzer. In addition, the concentration of the non-polar gas in the mixed gas to be supplied to the separation membrane is preferably 50 vol% or less, more preferably less than 50 vol%, still more preferably less than 25 vol%, particularly preferably less than 10 vol%. When the concentration falls within such ranges, the effect of the present invention can be exhibited while the heating of the separation membrane with the polar gas is efficiently performed.

The gas to be used as the non-polar gas is preferably a gas having a dynamic molecular diameter smaller than the average pore diameter of the separation membrane. Such gas easily permeates through the separation membrane, and hence the effect of the embodiment of the present invention becomes significant.

When a permeation rate (mol/m²/s/Pa) at 100°C and a permeation rate (mol/m²/s/Pa) at 200°C are represented by P100 and P200, respectively, the gas to be used as the non-polar gas preferably has a permeation rate change ratio represented by |P100-P200|/P100 of 0.6 or less. When the permeation rate change ratio falls within such range, the effect of the embodiment of the present invention described above becomes significant. The above-mentioned permeation rates may each be calculated by measuring the flow rate of a gas that permeates when a gas to be measured is introduced into a separation membrane primary side at 100 kPaG and a separation membrane secondary side is kept at 0 kPaG. At this time, P100 and P200 may be measured by controlling the temperatures of the separation membrane to 100°C and 200°C, respectively.

An example of the polar gas is CO₂. The concentration of the polar gas in the mixed gas to be supplied to the separation membrane is preferably higher than 50 vol%. When the concentration falls within such range, the effect of the present invention can be exhibited while the heating of the separation membrane with the polar gas is efficiently performed.

In one embodiment, the separation membrane complex may be configured to have a cylindrical shape. When a fluid to be treated is introduced at a predetermined introduction pressure (e.g., 0.5 MPa or more) into the inside of the cylindrical structure of the separation membrane complex, a fluid that permeates through the separation membrane complex (substantially the separation membrane) can be delivered from the surface of the separation membrane complex, and a fluid that does not permeate through the separation membrane complex can be passed in the longitudinal direction of the cylindrical separation membrane complex. As a result, the fluid to be treated can be separated. The separation membrane complex may include a single cylindrical structure or a plurality of cylindrical structures. The separation membrane complex preferably includes a plurality of cylindrical cells extending in the longitudinal direction.

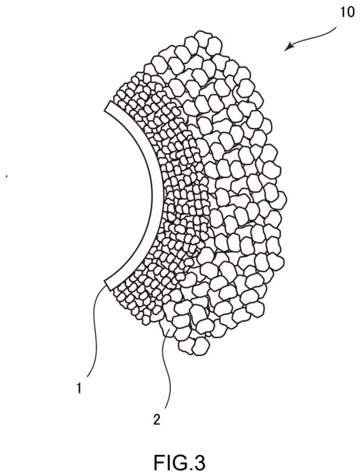

FIG. **2** is an explanatory view for illustrating the schematic configuration of a separation membrane complex in one embodiment of the present invention. FIG. **3** is a schematic cross-sectional view for illustrating the configuration of the separation membrane complex in one embodiment of the present invention. The separation membrane complex **10** has a plurality of cells **11** formed therein. The cells **11** are each formed in a cylindrical shape extending in the longitudinal direction of the separation membrane complex **10.** The cells **11** may serve as a flow path for the fluid to be treated. The separation membrane complex **10** includes the separation membrane **1,** and the separation membrane **1** is arranged on a porous substrate **2.** In one embodiment, the separation membrane **1** may be arranged so as to cover approximately the entire inside surface (that is, cell side surface) of the porous substrate **2.** Of the fluid to be treated that is passed through the cells **11,** a fluid having high permeability through the separation membrane **1** (permeate fluid) permeates through the separation membrane complex **10** to be delivered from a side surface **13** of the separation membrane complex **10.** Meanwhile, a fluid having low permeability through the separation membrane **1** (non-permeate fluid) is passed through the flow paths of the cells **11** to be delivered. The above-mentioned separation membrane complex may be used by being housed in any appropriate outer cylinder, though the outer cylinder is not illustrated.

In order to exhibit the separation function as described above, a temperature increase of the separation membrane complex **10** (substantially the separation membrane **1)** is preferably performed before the fluid to be treated is supplied. At the time of the temperature increase, when the mixed gas of the polar gas and the non-polar gas is supplied to the separation membrane **1** as described above, the temperature increase of the separation membrane can be efficiently performed, and an abnormality of the separation membrane can be detected with high sensitivity at an early stage. The above-mentioned mixed gas of the polar gas and the non-polar gas may be a gas formed of the same component as the above-mentioned fluid to be treated, or may be a gas formed of a different component.

The length of the separation membrane complex is, for example, from 10 cm to 200 cm. The outer diameter of the separation membrane complex is, for example, from 0.5 cm to 30 cm. The distance between the central axes of adjacent cells is, for example, from 0.3 mm to 10 mm. The inner diameter of each of the cells is, for example, from 1 mm to 10 mm.

### (Separation Membrane)

In one embodiment, in the separation membrane, the mixed fluid can be separated by a difference in permeability through the separation membrane having fine pores. For example, the fluid to be treated can be separated by the so-called molecular sieve effect that the permeability is controlled depending on the size of the molecule for forming the fluid and the pore diameter of the separation membrane.

The separation membrane is preferably an inorganic membrane. A material for forming the separation membrane is, for example, zeolite, silica, or carbon. The separation membrane formed of the inorganic membrane is used under high temperature, and hence there is an increased risk of the occurrence of an abnormality. However, when the separation membrane system is used, an abnormality of the separation membrane can be detected with high sensitivity at an early stage.

In one embodiment, a zeolite membrane is used as the above-mentioned separation membrane. The zeolite membrane includes a membrane formed from zeolite on the surface of the porous substrate. The zeolite membrane may contain two or more kinds of zeolites different from each other in structure or composition.

For example, the following zeolites may each be used as the zeolite for forming the zeolite membrane: zeolite in which an atom (T atom) positioned on the center of an oxygen tetrahedron (TO₄) for forming the zeolite is formed of only Si, or Si and Al; AlPO-type zeolite in which the T atom is formed of Al and P; SAPO-type zeolite in which the T atom is formed of Si, Al, and P; MAPSO-type zeolite in which the T atom is formed of magnesium (Mg), Si, Al, and P; and ZnAPSO-type zeolite in which the T atom is formed of zinc (Zn), Si, Al, and P. Part of the T atom may be substituted with any other element.

Examples of the zeolite include AEI-type, AEN-type, AFN-type, AFV-type, AFX-type, BEA-type, CHA-type, DDR-type, ERI-type, ETL-type, FAU-type (X-type or Y-type), GIS-type, LEV-type, LTA-type, MEL-type, MFI-type, MOR-type, PAD-type, RHO-type, SAT-type, and SOD-type zeolites. The maximum number of members in the ring of the zeolite is preferably 12 or less, more preferably 10 or less, still more preferably 8 or less. In addition, the number is preferably 6 or more, more preferably 8 or more.

The zeolite membrane contains, for example, Si. The zeolite membrane may contain, for example, any two or more of Si, Al, and P. The zeolite membrane may contain an alkali metal. The alkali metal is, for example, sodium (Na) or potassium (K). When the zeolite membrane contains a Si atom and an Al atom, a Si/Al ratio in the zeolite membrane is, for example, 1 or more and 100,000 or less. The Si/Al ratio is a molar ratio of a Si element to an Al element in the zeolite membrane. The Si/Al ratio is preferably 5 or more, more preferably 20 or more, still more preferably 100 or more. The ratio is preferably as high as possible. The Si/Al ratio in the zeolite membrane may be adjusted by adjusting, for example, a blending ratio between a Si source and an Al source in a starting material solution described later.

The average pore diameter of the separation membrane is, for example, from 0.2 nm to 1 nm, more preferably from 0.3 nm to 0.5 nm. The pore diameter of the separation membrane may be adjusted in accordance with desired composition of a permeate fluid. A separation membrane having a smaller average pore diameter has higher selectivity. The average pore diameter of the separation membrane is smaller than the average pore diameter of the porous substrate. When the separation membrane is a zeolite membrane, the arithmetic average of the short diameter and long diameter of an n-membered ring pore, where "n" represents the maximum number of members in the ring of the zeolite, is adopted as the average pore diameter. The term "n-membered ring pore" refers to such a pore that the number of oxygen atoms in a portion in which the oxygen atom are bonded to T atoms to form a ring structure is "n". When the zeolite has a plurality of n-membered ring pores equal to each other in "n", the arithmetic average of the short diameters and long diameters of all the n-membered ring pores is adopted as the average pore diameter of the zeolite. The average pore diameter of the zeolite membrane is determined by the framework structure of the zeolite and may be obtained from a value disclosed in the "Database of Zeolite Structures" of the International Zeolite Association, [online], from the Internet <URL: http://www.iza-structure.org/databases/>. In addition, the average pore diameter may be estimated by measuring the permeation performance of the separation membrane for each of gases having different molecular diameters. As a measurement method, there is given, for example, the method described in JP 2008-247654 A.

The thickness of the separation membrane is, for example, from 0.05 µm to 30 µm, preferably from 0.1 µm to 20 µm, more preferably from 0.5 µm to 10 µm. A thicker separation membrane has higher selectivity. A thinner separation membrane increases a permeation rate.

The surface roughness (Ra) of the separation membrane is, for example, 5 µm or less, preferably 2 µm or less, more preferably 1 µm or less, still more preferably 0.5 µm or less. Herein, the surface roughness (Ra) is an arithmetic surface roughness Ra measured in conformity with JIS B 0601.

The separation membrane may be formed by any appropriate method in accordance with a material for forming the membrane. For example, the zeolite membrane may be obtained by: applying zeolite serving as a seed crystal onto a porous substrate; immersing the porous substrate to which the seed crystal has adhered in a starting material solution; and growing zeolite from the seed crystal serving as a nucleus through hydrothermal synthesis. The starting material solution contains, for example, a silica source, an alumina source, organic matter, an alkali source, or water. A heating temperature in the hydrothermal synthesis is set to, for example, from 60°C to 200°C. A heating time is set to, for example, from 1 hour to 240 hours. In addition, the separation membrane may be formed by using a starting material slurry obtained by mixing an organic binder, a ceramic starting material, and a solvent.

### (Porous Substrate)

The porous substrate is configured to allow a gas to permeate therethrough. In the example illustrated in FIG. **2****,** the porous substrate **12** is a so-called monolith-type substrate in which an integrally-molded continuous columnar body has formed therein a plurality of through holes each extending in the longitudinal direction. In the example illustrated in FIG. **2****,** the porous substrate **12** has an approximately columnar shape. The cross-section perpendicular to the longitudinal direction of each of the through holes has, for example, an approximately circular shape. The separation membrane may be formed on the inside surfaces of the through holes to form a separation membrane complex (porous substrate/separation membrane) having cells formed therein. The shape of the porous substrate is not limited to the above-mentioned examples, and may be, for example, a honeycomb shape, a plate-like shape, a tubular shape, a cylindrical shape, a columnar shape, or a polygonal prism shape. In one embodiment, the separation membrane may be formed on the outside surface of a tubular porous substrate.

The length of the porous substrate is, for example, from 10 cm to 200 cm. The outer diameter of the porous substrate is, for example, from 0.5 cm to 30 cm. When the porous substrate has through holes, the distance between the central axes of adjacent through holes is, for example, from 0.3 mm to 10 mm. When the porous substrate has a tubular shape or a cylindrical shape, the thickness of the porous substrate is, for example, from 0.1 mm to 10 mm.

Any appropriate material is used as a material for the porous substrate. In one embodiment, the porous substrate is formed from a ceramic sintered compact. Examples of the ceramic sintered compact selected as the material for the porous substrate include alumina, silica, mullite, zirconia, titania, yttria, silicon nitride, and silicon carbide.

The porous substrate may contain an inorganic binding material. At least one of titania, mullite, easily sinterable alumina, silica, glass frit, clay mineral, or easily sinterable cordierite may be used as the inorganic binding material.

The porous substrate may have a single-layer configuration or a multilayer configuration. In one embodiment, the porous substrate has a multilayer structure of layers having different pore diameters as illustrated in FIG. **3****.** It is preferred that the pore diameter of the layer closer to the inside (i.e., a separation membrane side) be smaller.

The average pore diameter of the porous substrate is, for example, from 0.01 µm to 70 µm, preferably from 0.05 µm to 25 µm. The average pore diameter of the porous substrate on the separation membrane side is from 0.01 µm to 1 µm, preferably from 0.05 µm to 0.5 µm. With regard to the distribution of the pore diameters in the entirety including the surface and inside of the porous substrate, D5 is, for example, from 0.01 µm to 50 µm, D50 is, for example, from 0.05 µm to 70 µm, and D95 is, for example, from 0.1 µm to 2,000 µm. The porosity of the porous substrate on the separation membrane side is, for example, from 25% to 50%. The average pore diameter of the porous substrate may be measured with a mercury porosimeter, a perm porometer, a nano-perm porometer, or the like.

### (Measurement Device configured to measure Flow Rate of Non-polar Gas)

Any appropriate measurement device may be used as a measurement device configured to measure the flow rate of the non-polar gas in accordance with the kind of the non-polar gas to be used. For example, the flow rate of the non-polar gas that has permeated may be measured as follows: the flow rate of a permeate gas is measured with a mass flow meter; and the concentration of the non-polar gas in the permeate gas is measured with a gas chromatograph.

The above-mentioned separation membrane system may further include any appropriate element. For example, the separation membrane system may include a supplying portion for supplying a fluid, a collecting portion for collecting a fluid that has passed through the separation membrane complex, and a pressure adjusting portion for adjusting the pressure of a fluid flow path. The configuration of the separation membrane system is described in, for example, WO 2018/225325 A1, the description of which is incorporated herein by reference.

### B. Temperature Increase Method for Separation Membrane

A temperature increase method for a separation membrane according to one embodiment of the present invention includes: a step I of supplying, to a separation membrane, a mixed gas of a polar gas and a non-polar gas, the mixed gas being a heated mixed gas; and a step II of measuring a flow rate of the non-polar gas that has permeated through the separation membrane. As described above, when the mixed gas of the polar gas and the non-polar gas is used, the temperature increase of the separation membrane can be efficiently performed, and an abnormality of the separation membrane can be detected with high sensitivity at an early stage.

The concentration of the non-polar gas to be supplied to the separation membrane may be set as described in the section A.

The separation membrane may have the configuration described in the section A. In one embodiment, as described above, the separation membrane may form a separation membrane complex.

The flow rate of the mixed gas to be supplied to the separation membrane may be set to any appropriate flow rate.

For example, an abnormality of the separation membrane can be detected as follows: the flow rate of the non-polar gas that permeates when the separation membrane is normal is measured (or predicted) in advance; the flow rate is set as a normal flow rate; and the normal flow rate and the flow rate measured in the step II are compared to each other.

### Industrial Applicability

The separation membrane system of the present invention can be suitably used in a process of separating components in a mixed gas.

### Reference Signs List

- **1**: separation membrane
- **2**: porous substrate
- **10**: separation membrane complex

## Claims

1. A separation membrane system, comprising:
a supply line configured to supply a mixed gas of a polar gas and a non-polar gas to a separation membrane; and
a measurement device configured to measure a flow rate of the non-polar gas that has permeated through the separation membrane.

2. The separation membrane system according to claim 1, wherein the mixed gas is a heated gas.

3. The separation membrane system according to claim 2, further comprising a heating device arranged upstream of the separation membrane.

4. The separation membrane system according to any one of claims 1 to 3, wherein the separation membrane is a zeolite membrane.

5. A temperature increase method for a separation membrane, comprising the steps of:
supplying, to a separation membrane, a mixed gas of a polar gas and a non-polar gas, the mixed gas being a heated mixed gas; and
measuring a flow rate of the non-polar gas that has permeated through the separation membrane.

6. The temperature increase method for a separation membrane according to claim 5, wherein a concentration of the non-polar gas to be supplied to the separation membrane is less than 50 vol%.

7. The temperature increase method for a separation membrane according to claim 5, wherein a concentration of the non-polar gas to be supplied to the separation membrane is less than 25 vol%.
